## Europäisches Patentamt
## European Patent Office
## Office européen des brevets

(19)

(11) Veröffentlichungsnummer : **0 187 118**
**B1**

(12) **EUROPÄISCHE PATENTSCHRIFT**

(45) Veröffentlichungstag der Patentschrift :
**19.08.87**

(21) Anmeldenummer : **85730154.3**

(22) Anmeldetag : **21.11.85**

(51) Int. Cl.⁴ : **A 62 D   3/00**, B 09 B   3/00,
B 03 B   9/06, C 05 F   9/04

(54) Verfahren zur Reduzierung des Schadstoffgehaltes im Hausmüll.

(30) Priorität : 30.11.84 DE 3444227
05.06.85 DE 3520402

(43) Veröffentlichungstag der Anmeldung :
09.07.86 Patentblatt 86/28

(45) Bekanntmachung des Hinweises auf die Patenterteilung : 19.08.87 Patentblatt 87/34

(84) Benannte Vertragsstaaten :
AT BE CH DE FR GB IT LI LU NL SE

(56) Entgegenhaltungen :
EP-A- 0 129 206
DE-A- 2 314 539
CHEMICAL ABSTRACTS, Band 93, Nr. 25, 22. Dezember 1980, Seite 715, Nr. 237706t, Columbus, Ohio, US;
H.D. MOHR: "Effect of lime, peat and cation exchange
resin on the heavy metal uptake of grapevine (Vitus
vinifera L) from contaminated soils", & Z. PLANZE-
NERNÄHR. BODENKD. 1980, 143(50), 494-504
CHEMICAL ABSTRACTS, Band 93, Nr. 26, 29. Dezember 1980, Seite 244, Nr. 243366y, Columbus, Ohio, US;
H. FUSHIMI: "Adsorption phenomenon and recovery
technique of heavy metal ions by clay minerals", &
WASEDA   DAIGAKU   RIKOGAKU   KENKYUSHO
HOKOKU 1980, (89), 88-99

(73) Patentinhaber : **MANNESMANN Aktiengesellschaft**
**Mannesmannufer 2**
**D-4000 Düsseldorf 1 (DE)**

(72) Erfinder : **Schnorr, Karl-Ernst**
**Niederau 6**
**D-6335 Lahnau 3 (DE)**

(74) Vertreter : **Meissner, Peter E., Dipl.-Ing. et al**
**Meissner & Meissner Patentanwälte Herbertstrasse**
**22**
**D-1000 Berlin 33 Grunewald (DE)**

## Beschreibung

Die Erfindung betrifft ein Verfahren zur Reduzierung des Schadstoffgehaltes an wasserlöslichen Schwermetallen, Schwermetallverbindungen und Salzen in der organischen Fraktion von Hausmüll oder hausmüllähnlichen Abfällen sowie eine Vorrichtung zur Durchführung dieses Verfahrens.

Hausmüll kommunaler Provenienz hat mehr oder weniger hohe Gehalte an Schadstoffen, die sich durch Sorption, d. h. durch Adsorption und/oder Absorption binden lassen.

Es ist bekannt, daß die höchste Schadstoffkonzentration in der mineralischen Hausmüllfraktion zu finden ist (L. Schwalbe : 15. Abfallwirtschaftsseminar der TU Berlin, 13. und l4.06.1983). Aus diesem Grunde wird die mineralische Fraktion durch Absiebung oder Schwerkraftsichtung abgetrennt. Eine Minderung der Schadstoffkonzentration in den zur Wiederverwertung gelangenden Hausmüllkomponenten wird hiermit aber nicht erreicht. Weil in der Mülltonne feuchte Müllbestandteile mit trockenen gemischt werden, läßt sich nicht verhindern, daß solche Schadstoffe, die ursprünglich in der mineralischen Fraktion festgelegt waren, durch die Feuchte gelöst werden und wandern. Dadurch werden vorher saubere Müllkomponenten kontaminiert, so daß schließlich alle Müllkomponenten unbrauchbar werden.

Der Erfindung liegt die Aufgabe zugrunde, ein Verfahren zu schaffen, mit dem die o. g. Schadstoffe aus der organischen Fraktion der Abfälle wieder entfernt werden können, zumindest die Schadstoffkonzentration aber so weit gesenkt werden kann, daß die Verwendbarkeit der organischen Fraktion wieder gegeben ist.

Gelöst wird diese Aufgabe erfindungsgemäß durch ein Verfahren mit den Merkmalen des Patentanspruchs 1. Vorteilhafte Weiterbildungen des Verfahrens sind in den Unteransprüchen 2-22 gekennzeichnet. Eine Vorrichtung zur Durchführung des erfindungsgemäßen Verfahrens ist im Patentanspruch 23 gekennzeichnet. Die Unteransprüche 24-30 geben vorteilhafte Weiterbildungen dieser Vorrichtung an.

Der Erfindung liegt der Gedanke zugrunde, die wasserlöslichen Schadstoffkomponenten mit Hilfe eines Sorptionsmittels durch Adsorption und/oder Absorption zu binden und das Sorptionsmittel nach der Schadstoffbindung von den zu behandelnden Abfällen (organische Fraktion) wieder zu trennen. Da erfindungsgemäß vorgesehen ist, daß die Feuchte des Sorptionsmittels um mindestens 10 Gewichts-% geringer ist als die der zu behandelnden Abfälle, kommt es bei der Vermischung des Sorptionsmittels mit den Abfällen zu einer Feuchtigkeitsaufnahme des Sorptionsmittels und damit gleichzeitig auch zu einer Aufnahme der in der Feuchte gelösten Schadstoffe (Schwermetalle, Schwermetallverbindungen, Salze). Die Schadstoffe werden durch Adsorption und/oder Absorption an das Sorptionsmittel gebunden, dessen Sorptionspotential für die Schadstoffe höher sein muß als das der Abfälle. Unter Sorptionspotential wird hier das Vermögen verstanden, Schadstoffe wirksam zu binden. Mit zunehmender Beladung mit Schadstoffen verringert sich dieses Sorptionspotential. Erfindungswesentlich ist, daß die Sorption an den zu behandelnden Abfällen nicht länger durchgeführt wird, als bis durch die fortschreitende Fermentation der organischen Abfälle humine Stoffe (z. B. Huminsäure), deren Bildung aus dem Abbau höhermolekularer Verbindungen resultiert, in einer solchen Menge entstehen, daß sich die Sorptionsrichtung umkehren kann. Denn in dem Maße, wie sich die huminen Stoffe bilden, erhöht sich das Sorptionspotential der Abfälle. Die im Sorptionsmittel gebundenen Schadstoffe werden durch Trennung der Sorptionsmittel von den organischen Abfällen entfernt. Hierdurch wird also eine echte Reduzierung des Schadstoffgehaltes in der organischen Müllfraktion erreicht.

Die Vermischung der Abfälle mit den Sorptionsstoffen kann in der Weise erfolgen, daß sie stets als frischer Rohstoff den noch unbehandelten Abfällen zugemischt werden. Besonders vorteilhaft im Hinblick auf eine maximale Ausnutzung des Sorptionspotentials ist es, die Sorptionsstoffe quasi in einem Kreislauf zu führen, d. h. nach ihrer Abtrennung von den behandelten Abfällen erneut mit noch unbehandelten Abfällen zu vermischen.

Dabei wird ständig ein gewisser Anteil an frischen Sorptionsstoffen in den Kreislauf gegeben und ein entsprechender Anteil an mit Schadstoffen beladenen Sorptionsstoffen aus dem Kreislauf herausgenommen, damit die Schadstoffe auch tatsächlich entfernt werden. Vor ihrer Rückführung werden die Sorptionsstoffe einem Trocknungsprozeß unterzogen, der vorteilhafterweise mit der aus der Fermentation der organischen Abfälle entstehenden biologischen Wärme durchgeführt wird und ggf. durch zusätzliche Fremdenergie unterstützt wird. Als besonders wirksam hat sich das Verfahren erwiesen, wenn die Feuchte der Abfälle auf 30-45 Gewichts-% eingestellt wird. Trockenere Abfälle sollten daher ggf. mit Wasser befeuchtet werden. Eine Beschleunigung der Sorptionsvorgänge kann durch Zugabe von lösungsaktiven Flüssigkeiten, die auf die Schadstoffe wirken, in die Abfälle erreicht werden. Ebenfalls begünstigt werden die Sorptionsvorgänge, wenn der pH-Wert der Abfälle in den sauren Bereich verschoben wird, z. B. durch Zugabe von Säuren. Im Hinblick auf die spätere Verwertbarkeit der organischen Abfälle für biologische Zwecke empfiehlt sich bei einer Zugabe von Säuren die Verwendung von Salpetersäure, Phosphorsäure oder einer Mischung dieser Säuren, wobei zweckmäßig wässrige Lösungen zugemischt werden. Als Sorptionsstoffe kommen zum einen mineralische Stoffe oder Stoffgemische (insbesondere Kieselgur, Bleicherde, Tonerde, Quarzsand, Aktivkohle) oder auch Kunststoffpulver oder -granulate oder auch Mischungen von mineralischen Stoffen und Kunststoffanteilen in Frage. Als Kunststoffsorptionsmittel eignet sich z. B. Lewatit (Fa. Bayer). Von Vorteil ist die Zumischung von wasserbindenden Stoffen (z. B. ungelöschter Kalk) zu den Sorptionsstoffen, da diese den Trocknungsprozeß der Sorptionsstoffe nach der Sorption beschleunigen, gleichzeitig auch als Düngestoff erwünscht sind und dennoch als Wasserreservoir für die Mikroorganismen anzusehen sind. Da die spezifische Oberfläche eines Sorptionsstoffes für dessen Wirksamkeit von besonderer Bedeutung ist, werden die Sorptionsstoffe in feinkörniger bzw. pulvriger Form verwendet. Als vorteilhaft hat sich eine Teilchengrößen von unter 1 mm erwiesen.

Die Trennung der Sorptionsstoffe und der organischen Abfälle nach der Sorption wird durch die unterschiedliche Stoffdichte und Struktur der Komponenten erleichtert. Sie kann vorteilhaft durch Schwerkrafttrennung oder Siebtrennung in trockenem Zustand erfolgen. Hinsichtlich der aus dem Kreislauf ausgeschleusten Sorptionsstoffe kann eine unterschiedliche Behandlung vorgenommen werden. Zum einen ist es möglich, die mit Schadstoffen beladenen Sorptionsstoffe in einer Sondermülldeponie abzulagern. Zum anderen können die beladenen Sorptionsstoffe auch einem Aufbereitungsprozeß unterzogen werden, in dem mit Hilfe chemischer oder physikalischer Verfahren die Schadstoffe abgetrennt werden, um sie ggf. einer Weiterverarbeitung zuführen zu können, und die aufbereiteten, dekontaminierten Sorptionsstoffe erneut in den Sorptionskreislauf eingeführt werden.

Die Steuerung des Verfahrens wird dadurch ermöglicht, daß über Temperatur- und Feuchte-Meßfühler, die in dem Abluftstrom an unterschiedlichen Stellen entlang der Trocknungsstrecke eingesetzt sind, die sich ändernde Stoffwechselintensität und Wasserverdunstung festgestellt und danach Prozeßparameter wie z. B. Durchsatz geregelt werden. Die Stoffwechselintensität ist dabei ein wesentlicher Indikator für die Menge der lebenden Mikroorganismen und die Wasserverdunstung ein wesentlicher Indikator für das Vorhandensein biologisch leicht abbaubarer organischer Substanzen.

Das erfindungsgemäße Verfahren ermöglicht die Verwertung an sich weitgehend unbrauchbarer Abfallstoffe und erschließt damit eine neue Rohstoffquelle, wobei das Verfahren insgesamt mit einem günstigen Wirkungsgrad arbeiten kann, zumal die entstehende biologische Wärme bei der Fermentation der organischen Abfälle zur Verdunstung der Feuchtigkeitsteilmenge beiträgt, die bei der im Kreislauf geführten Sorptionsstoffmenge je Umlauf sonst anwachsen würde. Als verwertbares Endprodukt entsteht getrocknete, organische Substanz mit hohem Heizwert, hoher biologischer Aktivität und niedrigem Schadstoffgehalt, die z. B. als Brennstoff oder Bodenverbesserer genutzt werden kann.

Eine Vorrichtung zur Durchführung des Verfahrens beinhaltet zunächst eine Mischvorrichtung, an deren Aufgabenseite ein Zuförderer für den feuchten Abfall und ein Zuförderer für die Sorptionsstoffe enden. Die Abzugsseite des Mischers ist mit einem Förderer verbunden, der das Gemisch aus Abfällen und Sorptionsstoffen zu einer Trocknungsstrecke führt. An die Trocknungsstrecke schließt sich eine Trennvorrichtung zur Abtrennung der Sorptionsstoffe von den organischen Abfällen an. Vorteilhaft wird die Mischvorrichtung als Freifallmischer ausgebildet, der zusätzlich eine rotierende Bürste als Wandreiniger enthält.

Um eine besonders innige Vermischung des Mischgutes zu erzielen, sollte der Mischer auch eine Vorrichtung zur Abfallzerkleinerung beinhalten. Die Trocknungsstrecke wird vorteilhaft als Durchlauftrocknungsstrecke in Form eines Rottesilos ausgebildet, so daß die Entstehung biologischer Wärme begünstigt wird und eine kontinuierliche Trocknung erfolgt. Durch zusätzliche Gebläse, die Trocknungsluft in das Mischgut einblasen, wird der Trocknungsprozeß weiter gefördert. Das Trennorgan zur Abtrennung der Sorptionsstoffe von den organischen Abfällen kann als Vibrationssieb oder Schwerkraftsichter ausgebildet sein. Um das Sorptionsmittel zumindest teilweise in einem Kreislauf zur besseren Ausnutzung des Sorptionspotentials herumzuführen, wird die Abzugsseite des Trennorgans mit dem Zuförderer für das Sorptionsmittel verbunden. Dieser Zuförderer weist einerseits eine Zufuhr für frisches Sorptionsmittel auf und beinhaltet andererseits eine Vorrichtung zur Ausschleusung eines Teilstroms des Sorptionsmittels, damit die sorbierten Schadstoffe sukzessive aus dem Kreislauf ausgeschleust werden.

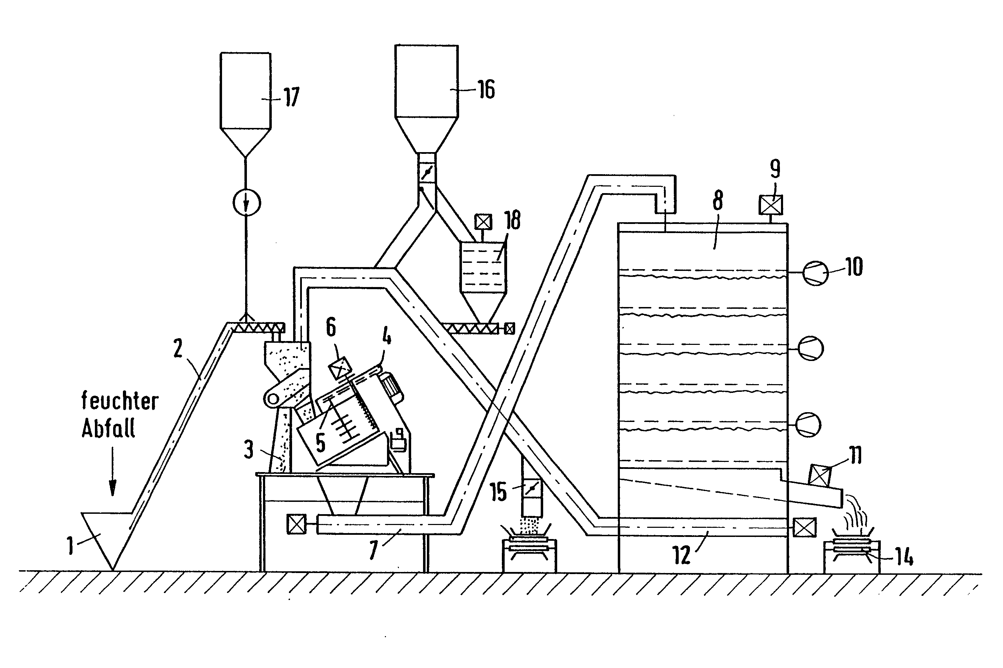

Im folgenden wird die Erfindung anhand des in der Figur dargestellten Anlagenbeispieles näher erläutert.

Der feuchte Abfall wird in den Aufgabetrichter 1 gegeben und mit dem Zuförderer 2 in den Dosiertrichter 3 eingefüllt. Aus diesem fällt der feuchte Hausmüll (organische Fraktion) in den Freifallmischer 4, der mit einem rotierenden Schlagwerk 5 und einem rotierenden Wandreiniger 6 ausgerüstet ist.

Die Abzugsseite des Mischers 4 ist mit dem Förderer 7 verbunden, der das Mischgut zu einer Trocknungsstrecke 8, die als Rottesilo ausgebildet ist, transportiert. Dort verteilt der Verteilförderer 9 das Mischgut gleichmäßig auf die obere Ebene des Rottesilos 8. Durch biologisch entstehende Wärme (Fermentation) und durch die mit Hilfe von Ventilatoren 10 zugeführte Trocknungsluft wird der Feuchtigkeitsgehalt des Mischgutes gesenkt. Am Ausgang des Rottesilos 8 ist ein Vibrationssieb 11 angeordnet, das die Trennung der organischen Abfallstoffe von den Sorptionsstoffen vornimmt. Die entkontaminierten organischen Stoffe treten auf den Abzugsförderer 14 aus, während die abgetrennten Sorptionsstoffe auf den Förderer 12 gelangen und in getrocknetem Zustand wiederum dem Mischer 4 zugeführt werden.

Ein Teil der mit Schadstoff beladenen Sorptionsstoffe wird über eine Schleuse 15 auf eine Abzugsvorrichtung 13 geleitet und aus dem Kreislauf entfernt. In gleichem Maße werden frische Sorptionsstoffe aus einer Zuführung 16 in den Sorptionsmittelkreislauf eingebracht, so daß die Gesamtmenge des umlaufenden Sorptionsmittels konstant bleibt. Sofern der zur Aufbereitung vorgesehene Müll eine zu geringe Feuchtigkeit aufweist, kann über eine Vorrichtung 17 Feuchtigkeit in Form von Wasser oder Säure dem Abfall zugegeben werden. Eine Dekontaminierung der mit Schadstoffen beladenen Sorptionsstoffe kann auf chemischem oder physikalisch-thermischem Wege in der Schadstoffdekontaminierungsanlage 18 erfolgen.

**Patentansprüche**

1. Verfahren zur Reduzierung des Gehaltes an aus wasserlöslichen Schwermetallen, Schwermetallverbindungen und Salzen bestehenden Schadstoffen in der organischen Fraktion von Hausmüll oder hausmüllähnlichen Abfällen, dadurch gekennzeichnet, daß dem feuchten Abfall Sorptionsstoffe beigemischt werden, deren Sorptionspotential für die Schadstoffe größer und deren Feuchte um mindestens 10 Gewichts-% geringer ist im Vergleich zu den Abfällen, und daß die Sorptionsstoffe nach sorptiver Bindung der Schadstoffe und unvollständiger Fermentation wieder abgetrennt werden, bevor durch weitere Fermentation der Abfälle in für die Sorption hinderlichem Maße humine Stoffe entstehen.

2. Verfahren nach Anspruch 1, dadurch gekennzeichnet, daß die Sorptionsstoffe als frischer Rohstoff den Abfällen zugemischt werden.

3. Verfahren nach Anspruch 1, dadurch gekennzeichnet, daß die Sorptionsstoffe nach ihrer Abtrennung teilweise in einem Kreislauf geführt und erneut mit noch unbehandelten Abfällen gemischt werden, wobei in den Kreislauf ständig in gleichem Maße frische Sorptionsstoffe eingebracht werden, wie mit Schadstoffen beladene Sorptionsstoffe herausgenommen werden.

4. Verfahren nach Anspruch 3, dadurch gekennzeichnet, daß die teilweise mit Schadstoffen beladenen Sorptionsstoffe erst nach einer Trocknungsbehandlung wieder mit Abfällen vermischt werden.

5. Verfahren nach einem der Ansprüche 1-4, dadurch gekennzeichnet, daß das Gemisch aus Sorptionsstoffen und Abfall während der fortschreitenden Fermentation des Abfalls und der Sorption der Schadstoffe einer Trocknung unterzogen wird.

6. Verfahren nach Anspruch 4 oder 5, dadurch gekennzeichnet, daß die Trocknungsbehandlung zumindest teilweise mit biologisch entstehender Wärme durchgeführt wird.

7. Verfahren nach Anspruch 5 und 6, dadurch gekennzeichnet, daß bei der Trocknung in einer Durchlauftrocknungsstrecke durch das Gemisch ein Luftstrom hindurchgeführt wird, wobei Temperatur und Feuchte des Abluftstromes an verschiedenen Stellen entlang dem Materialfluß gemessen und als Maß für die jeweilige Stoffwechselintensität und Wasserverdunstung zur Steuerung des in der Trocknungsstrecke durchgesetzten Massenstromes benutzt werden.

8. Verfahren nach einem der Ansprüche 1-7, dadurch gekennzeichnet, daß die Feuchte der Abfälle auf 30-45 Gewichts-% eingestellt wird.

9. Verfahren nach einem der Ansprüche 1-8, dadurch gekennzeichnet, daß dem Abfall hinsichtlich der Schadstoffe lösungsaktive Flüssigkeiten zugegeben werden.

10. Verfahren nach einem der Ansprüche 1-9, dadurch gekennzeichnet, daß dem Abfall zur pH-Wert-Verschiebung Säuren zugegeben werden.

11. Verfahren nach Anspruch 10, dadurch gekennzeichnet, daß Salpetersäure, Phosphorsäure oder eine Mischung dieser Säuren in Form einer wässrigen Lösung zugegeben wird.

12. Verfahren nach einem der Ansprüche 1-11, dadurch gekennzeichnet, daß als Sorptionsstoffe mineralische Stoffe oder sie enthaltende Stoffgemische verwendet werden.

13. Verfahren nach Anspruch 12, dadurch gekennzeichnet, daß als Sorptionsstoffe Kieselgur, Bleicherde, Tonerde, Quarzsand und/oder Aktivkohle verwendet werden.

14. Verfahren nach einem der Ansprüche 1-11, dadurch gekennzeichnet, daß als Sorptionsstoffe Kunststoffpulver oder -granulate verwendet werden.

15. Verfahren nach Anspruch 12 und 14, dadurch gekennzeichnet, daß als Sorptionsstoffe Gemische aus mineralischen Stoffen und Kunststoffpulver oder -granulat verwendet werden.

16. Verfahren nach einem der Ansprüche 1-15, dadurch gekennzeichnet, daß den Sorptionsstoffen wasserbindende Stoffe zugesetzt werden.

17. Verfahren nach Anspruch 16, dadurch gekennzeichnet, daß als wasserbindender Stoff ungelöschter Kalk zugesetzt wird.

18. Verfahren nach Anspruch 12, dadurch gekennzeichnet, daß die Korngröße der mineralischen Stoffe weniger als 1 mm beträgt.

19. Verfahren nach einem der Ansprüche 1-18, dadurch gekennzeichnet, daß die einzelnen Teilchen der mineralischen Sorptionsstoffe eine kristalline Form aufweisen.

20. Verfahren nach einem der Ansprüche 1-19, dadurch gekennzeichnet, daß die mineralischen Sorptionsstoffe nach der Bindung der Schadstoffe durch Schwerkraftsichtung von den Abfällen getrennt werden.

21. Verfahren nach einem der Ansprüche 1-19, dadurch gekennzeichnet, daß die mineralischen Sorptionsstoffe nach Bindung der Schadstoffe durch Siebung von den Abfällen getrennt werden.

22. Verfahren nach einem der Ansprüche 1-21, dadurch gekennzeichnet, daß die Sorptionsstoffe nach der Abtrennung durch chemische oder physikalische Verfahren dekontaminiert und wieder zur Sorption verwendet werden.

23. Vorrichtung zur Durchführung des Verfahrens nach Anspruch 1, gekennzeichnet durch eine Mischvorrichtung (4), zu deren Aufgabenseite ein Zuförderer (2) für den feuchten Abfall und ein Zuförderer (12) für die Sorptionsstoffe führen und deren Abzugseite mit einem zu einer Trocknungsstrecke (8) führenden Förderer (7) verbunden ist, wobei an die Trocknungsstrecke (8) eine Trennvorrichtung (11) zur Abtrennung der Sorptionsstoffe von den organischen Abfällen anschließt.

24. Vorrichtung nach Anspruch 23, dadurch gekennzeichnet, daß die Mischvorrichtung (4) als Freifallmischer ausgebildet ist, der mit einer rotierenden Bürste (6) als Wandreiniger ausgestattet ist.

25. Vorrichtung nach Anspruch 23 oder 24, dadurch gekennzeichnet, daß die Mischvorrichtung (4) eine Vorrichtung zur Abfallzerkleinerung (5) beinhaltet.

26. Vorrichtung nach einem der Ansprüche 23-25, dadurch gekennzeichnet, daß die Trocknungsstrecke (8) als Rottesilo ausgebildet ist.

27. Vorrichtung nach einem der Ansprüche 23-26, dadurch gekennzeichnet, daß in der Trocknungsstrecke (8) mindestens eine Vorrichtung (10) zum Einblasen von Trocknungsluft in das Mischgut vorgesehen ist.

28. Vorrichtung nach einem der Ansprüche 23-27, dadurch gekennzeichnet, daß die Trocknungsstrecke (8) mit biologisch entstehender Wärme und/oder mit Fremdenergie beheizbar ist.

29. Vorrichtung nach einem der Ansprüche 23-28, dadurch gekennzeichnet, daß entlang der Trocknungsstrecke (8) mehrere Meßfühler zur Ermittlung von Temperatur und Feuchte des Abluftstromes angeordnet sind, die steuerungstechnisch mit einer Regeleinrichtung für den Massenstrom durch die Trocknungsstrecke (8) verbunden sind.

30. Vorrichtung nach einem der Ansprüche 23-29, dadurch gekennzeichnet, daß die Trennvorrichtung (11) als Vibrationssieb oder Schwerkraftsichter ausgebildet ist.

31. Vorrichtung nach einem der Ansprüche 23-30, dadurch gekennzeichnet, daß die für die Sorptionsstoffe vorgesehene Abzugseite der Trennvorrichtung (11) mit dem Zuförderer (12) verbunden ist, der zur Auskopplung eines Teilstromes der Sorptionsstoffe eine zu einer Abzugsvorrichtung (13) führende Schleuse (15) und der eine Zuführung (16) für frische Sorptionsstoffe aufweist.

## Claims

1. Method to reduce the content of harmful substances consisting of watersoluble heavy metals, heavy metal compounds and salts in the organic fraction of household refuse or waste similar to household refuse, characterized in that sorption substances are admixed to the moist waste, the sorption potential of which for the harmful substances is greater, and the moistness of which is less by at least 10 % by weight compared with the waste, and that after sorptive take-up of the harmful substances and incomplete fermentation, the sorption substances are separated again, before humic substances occur through further fermentation of the waste to an extent which is obstructive for the sorption.

2. Method according to Claim 1, characterized in that the sorption substances are mixed with the waste as a fresh raw material.

3. Method according to Claim 1, characterized in that after their separation, the sorption substances are partially guided in a circuit and are mixed again with waste which is still untreated, whereby fresh sorption substances are continually introduced into the circuit at the same extent as sorption substances which are charged with harmful substances are removed.

4. Method according to Claim 3, characterized in that the sorption substances, which are partially charged with harmful substances, are only mixed with waste again after a drying treatment.

5. Method according to one of Claims 1-4, characterized in that the mixture of sorption substances and waste is subjected to a drying during the progressive fermentation of the waste and the sorption of the harmful substances.

6. Method according to Claim 4 or 5, characterized in that the drying treatment is carried out at least partially with heat which occurs biologically.

7. Method according to Claim 5 and 6, characterized in that on drying in a continuous drying section, a current of air is passed through the mixture, whereby the temperature and humidity of the exhaust air current are measured at various locations along the flow of material and are used as a measurement for the respective metabolic intensity and water evaporation to control the mass flow which is carried through in the drying section.

8. Method according to one of Claims 1-7, characterized in that the humidity of the waste is set at 30-45 % by weight.

9. Method according to one of Claims 1-8, characterized in that fluids are added to the waste which are active in terms of dissolution with regard to the harmful substances.

10. Method according to one of Claims 1-9, characterized in that acids are added to the waste to shift the pH value.

11. Method according to Claim 10, characterized in that nitric acid, phosphoric acid or a mixture of these acids is added in the form of an aqueous solution.

12. Method according to one of Claims 1-11, characterized in that mineral substances or substance mixtures containing them are used as sorption substances.

13. Method according to Claim 12, characterized in that kieselguhr, bleaching earth, alumina, quartz sand and/or activated carbon are used as sorption substances.

14. Method according to one of Claims 1-11, characterized in that synthetic material powders or granulates are used as sorption substances.

15. Method according to Claim 12 and 14, characterized in that mixtures of mineral substances and synthetic material powder or granulate are used as sorption substances.

16. Method according to one of Claims 1-15, characterized in that water-imbibent substances are added to the sorption substances.

17. Method according to Claim 16, characterized in that quicklime is added as water-imbibent substance.

18. Method according to Claim 12, characterized in that the grain size of the mineral substances is less than 1 mm.

19. Method according to one of Claims 1-18, characterized in that the individual particles of the mineral sorption substances have a crystalline form.

20. Method according to one of Claims 1-19, characterized in that after the take-up of the harmful substances, the mineral sorption substances are separated from the waste by gravity sifting.

21. Method according to one of Claims 1-19, characterized in that after take-up of the harmful substances, the mineral sorption substances are separated from the waste by screening.

22. Method according to one of Claims 1-21, characterized in that after the separation, the sorption substances are decontaminated through chemical or physical methods and are used again for sorption.

23. Device to carry out the method according to Claim 1, characterized by a mixing device (4), to the delivery side of which a conveyor (2) leads for the moist waste and a conveyor (12) leads for the sorption substances, and the outlet side of which is connected with a conveyor (7) leading to a drying section (8), whereby a separating device (11) is joined to the drying section (8) for the separation of the sorption substances from the organic waste.

24. Device according to Claim 23, characterized in that the mixing device (4) is constructed as a free-fall mixer, which is equipped with a rotating brush (6) to clean the wall.

25. Device according to Claim 23 or 24, characterized in that the mixing device (4) contains a device for the comminution of waste (5).

26. Device according to one of Claims 23-25, characterized in that the drying section (8) is constructed as a rotting silo.

27. Device according to one of Claims 23-26, characterized in that in the drying section (8) at least one device (10) is provided to blast drying air into the mixed material.

28. Device according to one of Claims 23-27, characterized in that the drying section (8) is able to be heated with heat which occurs biologically and/or with external energy.

29. Device according to one of Claims 23-28, characterized in that along the drying section (8) several measuring sensors are arranged to determine the temperature and humidity of the exhaust air current, which are connected by way of control engineering with a regulating arrangement for the mass flow through the drying section (8).

30. Device according to one of Claims 23-29, characterized in that the separating device (11) is constructed as a vibrating screen or gravity sifter.

31. Device according to one of Claims 23-30, characterized in that the outlet side of the separating device (11), which is provided for the sorption substances, is connected with the conveyor (12), which for the removal of a partial current of the sorption substances has a sluice (15) leading to a drawing off device (13), and has a supply arrangement (16) for fresh sorption substances.

**Revendications**

1. Procédé pour réduire la teneur en matières polluantes constituées de métaux lourds, de composés de métaux lourds et de sels dans la fraction organique d'ordures ménagères ou de déchets analogues à des ordures ménagères, caractérisé en ce que des matières de sorption sont ajoutées aux déchets humides, dont le potentiel de sorption vis-à-vis des substances polluantes est plus grand et dont l'humidité est d'environ au moins 10 % en poids plus faible par rapport aux déchets, et en ce que les matières de sorption après liaison par absorption ou adsorption des substances polluantes et fermentation incomplète sont à nouveau séparées, avant qu'il ne se crée de l'humine, par fermentation ultérieure des déchets, en une quantité gênant la sorption.

2. Procédé selon la revendication 1, caractérisé en ce que les matières de sorption sont ajoutées aux déchets sous forme de matières brutes fraîches.

3. Procédé selon la revendication 1, caractérisé en ce que les matières de sorption, après leur séparation, sont en partie recyclées et mélangées à nouveau à des déchets qui ne sont pas encore traités, des matières de sorption fraîches étant amenées continuellement dans le cycle en même quantité que les matières de sorption chargées de substances polluantes qui en sont évacuées.

4. Procédé selon la revendication 3, caractérisé en ce que les matières de sorption chargées en partie de substances polluantes ne sont à nouveau mélangées aux déchets qu'après un traitement de séchage.

5. Procédé selon l'une des revendications 1 à 4, caractérisé en ce que le mélange de matières de sorption et de déchets subit un séchage pendant la fermentation progressive des déchets et la sorption des substances polluantes.

6. Procédé selon la revendication 4 ou 5, caractérisé en ce que le traitement de séchage est mis en œuvre, au moins en partie, à l'aide de la chaleur biologiquement créée.

7. Procédé selon les revendications 5 et 6, caractérisé en ce que, lors du séchage dans une étendue de séchage continue, un courant d'air traverse le mélange, la température et l'humidité du courant d'air étant mesurées en différents endroits le long du flux de matière, et étant utilisées comme mesure de l'intensité du métabolisme et de l'évaporation d'eau respectives pour commander le courant massique qui traverse l'étendue de séchage.

8. Procédé selon l'une des revendications 1 à 7, caractérisé en ce que l'humidité des déchets est réglée entre 30-45 % en poids.

9. Procédé selon l'une des revendications 1 à 8, caractérisé en ce que des liquides activant la solubilisation des substances polluantes sont ajoutés aux déchets.

10. Procédé selon l'une des revendications 1 à 9, caractérisé en ce que des acides, pour modifier le pH, sont ajoutés aux déchets.

11. Procédé selon la revendication 10, caractérisé en ce que de l'acide nitrique, de l'acide phosphorique ou un mélange de ces acides sous forme d'une solution aqueuse est ajouté.

12. Procédé selon l'une des revendications 1 à 11, caractérisé en ce que, en tant que matières de sorption, on utilise des matières minérales ou des mélanges les contenant.

13. Procédé selon la revendication 12, caractérisé en ce que, en tant que matières de sorption, on utilise de la diatomite, de l'argile absorbante, de l'alumine, du sable silicieux et/ou du charbon actif.

14. Procédé selon l'une des revendications 1 à 11, caractérisé en ce que, en tant que matières de sorption, on utilise une poudre ou des granulés synthétiques.

15. Procédé selon les revendications 12 et 14, caractérisé en ce que, en tant que matières de sorption, on utilise des mélanges de matières minérales et de poudre ou de granulés synthétiques.

16. Procédé selon l'une des revendications 1 à 15, caractérisé en ce que des matières se liant à l'eau sont ajoutées aux matières de sorption.

17. Procédé selon la revendication 16, caractérisé en ce que, en tant que matière se liant à l'eau, on ajoute de la chaux vive.

18. Procédé selon la revendication 12, caractérisé en ce que la granulométrie des matières minérales est inférieure à 1 mm.

19. Procédé selon l'une des revendications 1 à 18, caractérisé en ce que les particules individuelles des matières de sorption minérales présentent une forme cristalline.

20. Procédé selon l'une des revendications 1 à 19, caractérisé en ce que les matières de sorption minérales sont séparées, après liaison des substances polluantes, des déchets à l'aide d'un séparateur par gravité.

21. Procédé selon l'une des revendications 1 à 19, caractérisé en ce que les matières de sorption minérales sont séparées, après liaison des substances polluantes, des déchets par tamisage.

22. Procédé selon l'une des revendications 1 à 21, caractérisé en ce que les matières de sorption, après séparation, sont décontaminées par un procédé physique ou chimique et utilisées à nouveau pour la sorption.

23. Dispositif pour la mise en œuvre du procédé selon la revendication 1, caractérisé par un dispositif de mélange (4), au côté de chargement duquel aboutissent un transporteur (2) pour les déchets humides et un transporteur (12) pour les matières de sorption et dont le côté d'évacuation est relié à un transporteur (7) conduisant à une étendue de séchage (8), un dispositif de séparation (11) étant raccordé à l'étendue de séchage (8) pour séparer les matières de sorption des déchets organiques.

24. Procédé selon la revendication 23, caractérisé en ce que le dispositif de mélange (4) est constitué d'un mélangeur à chute libre, qui est équipé d'une brosse rotative (6) en tant que nettoyeur de paroi.

25. Dispositif selon la revendication 23 ou 24, caractérisé en ce que le dispositif de mélange (4) comporte un dispositif de fragmentation (5).

26. Dispositif selon l'une des revendications 23 à 25, caractérisé en ce que l'étendue de séchage (8) est réalisée sous forme d'un silo à étages.

27. Dispositif selon l'une des revendications 23 à 26, caractérisé en ce que, dans l'étendue de séchage (8), est prévu au moins un dispositif (10) pour souffler de l'air de séchage dans le mélange.

28. Dispositif selon l'une des revendications 23 à 27, caractérisé en ce que l'étendue de séchage (8) peut être chauffée par la chaleur biologiquement créée et/ou par de l'énergie externe.

29. Dispositif selon l'une des revendications 23 à 28, caractérisé en ce que, le long de l'étendue de séchage (8), sont disposés plusieurs capteurs pour détecter la température et l'humidité du courant d'air d'évacuation, lesquels commandent un dispositif de réglage du courant massique à travers l'étendue de séchage (8).

30. Dispositif selon l'une des revendications 23 à 29, caractérisé en ce que le dispositif de séparation (11) est réalisé sous forme d'un tamis vibrant ou d'un séparateur par gravité.

31. Dispositif selon l'une des revendications 23 à 30, caractérisé en ce que le côté d'évacuation, pour les matières de sorption, du dispositif de séparation (11) est relié au transporteur (12), qui comporte un sas (15) conduisant à un dispositif d'évacuation (13) pour l'évacuation d'une partie des matières de sorption et qui présente une alimentation (16) en matières de sorption fraîches.